# EUROPEAN PATENT APPLICATION

(11) **EP 4 539 213 A1**
(43) Date of publication of application: **16.04.2025**
(21) Application number: 23202981.9
(22) Date of filing: 11.10.2023
(51) Int. Cl.: H01M 50/103, H01M 50/124, H01M 50/209, H01M 50/342, H01M 50/505

(54) **BATTERY PACK FOR AN ELECTRIC VEHICLE, BATTERY CELL, AND USE OF A BATTERY PACK**

(71) Applicant: Volvo Car Corporation, 405 31 Göteborg (SE)
(72) Inventor: WERBERG, Leopold, 40531 Göteborg (SE); LARSSON, Patrik, 40531 Göteborg (SE); WALLBORG, Martin Hjälm, 40531 Göteborg (SE)
(74) Representative: Maiwald GmbH

(57) **Abstract**

The disclosure relates to a battery pack (10) for an electric vehicle. The battery pack (10) comprises a plurality of prismatic battery cells (12) and at least one structural member (44). Each battery cell (12) comprises a first side (14) on which two electric connection terminals (16a, 16b) are provided, a second side (18) arranged opposite the first side (14), and a circumferentially closed lateral side (20) extending between the first side (14) and the second side (18). Each of the prismatic battery cells (12) comprises an electrically insulative coating (30) provided on one or more of the first side (14), the second side (18) and the lateral side (20). Moreover, the plurality of prismatic battery cells (12) are arranged side by side along a straight stacking direction (S). Neighboring battery cells (12) directly contact each other or are directly mechanically connected to one another using adhesive (42). Additionally, at least one of the plurality of battery cells (12) directly contacts the at least one structural member (44) or is directly mechanically connected to the at least one structural member (44) using adhesive (42). Moreover, a prismatic battery cell (12) for such a battery pack (10) is shown. Furthermore, a use of such a battery pack (10) as a structural component of a vehicle body is explained.

## Description

### TECHNICAL FIELD

The present disclosure relates to a battery pack for an electric vehicle.

The present disclosure is also directed to a prismatic battery cell for a battery pack.

Furthermore, the present disclosure relates to a use of a battery pack.

### BACKGROUND ART

In electric vehicles, battery packs are used in order to store electric energy. When operating the electric vehicle, this electric energy is used in order to provide electric power to one or more electric motors of the drivetrain of the electric vehicle. Usually, such battery packs comprise a plurality of battery cells, e.g. prismatic battery cells.

In order to allow the electric vehicle to have a comparatively large driving range, i.e. in order to allow the vehicle to drive a comparatively long distance without the need to recharge, an electric storage capacity of the battery pack needs to be as large as possible. In other words, the volume and/or number of the battery cells of the battery pack need to be as large as possible. At the same time, the weight of the electric vehicle needs to be kept as low as possible. Consequently, the challenge is to provide a high electric storage capacity at a comparatively low weight.

### SUMMARY

It is an objective of the present disclosure to solve or at least mitigate the conflict of objectives of the high electric storage capacity and the comparatively low weight.

The problem is at least partially solved or alleviated by the subject matter of the independent claims of the present disclosure, wherein further examples are incorporated in the dependent claims.

According to a first aspect, there is provided a battery pack for an electric vehicle. The SE:TOP
battery pack comprises a plurality of prismatic battery cells and at least one structural member. Each battery cell comprises a first side on which two electric connection terminals are provided, a second side arranged opposite the first side, and a circumferentially closed lateral side extending between the first side and the second side. Each of the prismatic battery cells comprises an electrically insulative coating provided on one or more of the first side, the second side and the lateral side. The plurality of prismatic battery cells are arranged side by side along a straight stacking direction. Neighboring battery cells directly contact each other or are directly mechanically connected to one another using adhesive. Moreover, at least one of the plurality of battery cells directly contacts the at least one structural member or is directly mechanically connected to the at least one structural member using adhesive. In such a configuration, the electrically insulative coating of the battery cells enables the direct contact between neighboring battery cells or the mechanical connection of neighboring battery cells using adhesive. It is only due to the coating that this neighboring battery cells may be electrically isolated from one another at the same time. In the same manner, the electrically insulative coating of the battery cells enables the direct contact between at least one of the plurality of battery cells and the at least one structural member or the mechanical connection of the at least one battery cell and the at least one structural member using adhesive. Also in this respect it is due to the coating that the at least one battery cell may be electrically isolated from the at least one structural member at the same time. Altogether, in the battery pack of the present disclosure, the battery cells are mechanically connected to one another, either by a direct contact or by adhesive, and at the same time electrically insulated from one another. Moreover, at least one of the battery cells is mechanically connected to the structural member, either by direct contact or by adhesive, and at the same time electrically insulated from the structural member. Due to these properties, the battery pack according to the present disclosure may be used as a structural component of an electric vehicle. This means that the battery pack may be used to carry and/or absorb mechanical loads occurring during use of the vehicle. Consequently, the remaining structural components of the electric vehicle may be adapted to the load-bearing capacity of the battery pack, i.e. the remaining structural components may be reduced in size and weight. This has the effect that, using a battery pack according to the present disclosure, a high electric storage capacity may be provided in an electric vehicle, while at the same time keeping the total weight comparatively low.

It is noted, that in the context of the present disclosure, the coating of the battery cells is an integral part of the respective battery cell. In other words, the battery cells comprise the coating.

According to an example, the coating of the battery cells is UV-curable. Such a coating may be provided in a comparatively simple manner. Additionally, using such a coating provides a reliable electric insulation.

In an example, an enclosure of a battery cell may be electrically connected to a positive terminal of the battery cell, i.e. to an electrical high voltage system. This is done in order to avoid internal corrosion of the battery cell.

Furthermore, a direct contact between neighboring battery cells or between a battery cell and a structural member means that the respective components contact each other without further intermediate parts. This increases the volumetric efficiency of an electric storage formed by the battery cells, i.e. a comparatively large electric storage may be provided in a comparatively small volume.

According to an example, the prismatic cells are cuboid-shaped. This means that the first side and the second side are substantially rectangular. Moreover, the first side and the second side are arranged in parallel.

In an example, a first area of the first side is coating-free. A first one of the two electric connection terminals is located in the first area. Additionally, a second area of the first side is coating-free. A second one of the two electric connection terminals is located in the second area. In other words, the electrically insulative coating is interrupted at the location of the electric connection terminals. In this context, the first area and the second area may be separate from one another or connected. In the latter case, the first area and the second area are portions of a larger, joint area. Keeping the first area and the second area free from coating allows to reliably connect the battery cell, more precisely the electric connection terminals thereof, in the electric sense. The remaining portions of the first side may be covered with electrically insulative coating. This allows to use the remaining portions in a mechanical sense. For example, the remaining portions may directly contact a structural member of the battery pack. Alternatively, the remaining portions may be connected to the structural member using adhesive. This enhances the load-bearing capacity of the battery cell. Additionally, having the remaining portions of the first side covered with coating increases clearance distances between electrically conducting components, e.g. components of the high voltage system, and/or between electrically conducting components, e.g. components of the high voltage system, and components at ground potential, e.g. structural components of the battery pack or the electric vehicle. Moreover, having the remaining portions of the first side covered with coating increases creepage distances between electrically conducting components, e.g. components of the high voltage system, and/or between electrically conducting components, e.g. components of the high voltage system, and components at ground potential, e.g. structural components of the battery pack or the electric vehicle. Both the increased clearance distances and the increase creepage distances allow for an electrically safe operation of the battery pack.

According to an example, coating is provided on a portion of the first side located between the two electric connection terminals. This allows to use this portion in a mechanical sense. For example, this portion may directly contact a structural member of the battery pack. Alternatively, this portion may be connected to the structural member using adhesive. This enhances the load-bearing capacity of the battery cell.

In an example, each battery cell of the plurality of battery cells comprises a degassing valve and a third area of the first side is coating-free, wherein the degassing valve is located in the third area. In other words, the electrically insulative coating is interrupted at the location of the degassing valve. Consequently, an operation of the degassing valve is not hindered by the coating. This allows for safe operation of the battery pack.

In an example, coating is provided on a portion of the first side located between the degassing valve and at least one of the two electric connection terminals. According to an example, both a portion of the first side located between the degassing valve and one of the two electric connection terminals and a portion of the first side located between the degassing valve and the respective other one of the two electric connection terminals are covered with coating. The portions of the first side comprising coating may be used in a mechanical sense. For example, these portions may directly contact a structural member of the battery pack. Alternatively, these portions may be connected to the structural member using adhesive. This enhances the load-bearing capacity of the battery cell. Additionally, having these portions of the first side covered with coating increases clearance distances between electrically conducting components, e.g. components of the high voltage system, and/or between electrically conducting components, e.g. components of the high voltage system, and components at ground potential, e.g. structural components of the battery pack or the electric vehicle. Moreover, having these portions of the first side covered with coating increases creepage distances between electrically conducting components, e.g. components of the high voltage system, and/or between electrically conducting components, e.g. components of the high voltage system, and components at ground potential, e.g. structural components of the battery pack or the electric vehicle. Both the increased clearance distances and the increase creepage distances allow for an electrically safe operation of the battery pack.

According to an example, coating is provided at least in a border zone of the first side. The border zone covers a portion of the first side located adjacent to an edge of the first side. In an example, the border zone extends along all edges of the first side. In a case in which the first side is substantially rectangular, the border zone also has a substantially rectangular shape. The shape of the border zone may as well be described as frame-shaped. According to a further example, the border zone extends along all edges of the first side and is at least 1 mm wide or thick. This means that the border zone at least covers the portion of the first side which is located at a distance of 1 mm or less from the edges of the first side. According to another example, the border zone extends along all edges of the first side and is at least 2 mm wide or thick. This means that the border zone at least covers the portion of the first side which is located at a distance of 2 mm or less from the edges of the first side. According to a further example, the border zone extends along all edges of the first side and is at least 3 mm wide or thick. This means that the border zone at least covers a portion of the first side which is located at a distance of 3 mm or less from an edge of the first side. Thus, the border zone. Providing coating in the border zone increases clearance distances between electrically conducting components, e.g. components of the high voltage system, and/or between electrically conducting components, e.g. components of the high voltage system, and components at ground potential, e.g. structural components of the battery pack or the electric vehicle. Thus, undesired arcing effects are avoided. Moreover, providing coating in the border zone increases creepage distances between electrically conducting components, e.g. components of the high voltage system, and/or between electrically conducting components, e.g. components of the high voltage system, and components at ground potential, e.g. structural components of the battery pack or the electric vehicle. Both the increased clearance distances and the increase creepage distances allow for an electrically safe operation of the battery pack.

In an example, coating is provided on the first side and the coating provided on the first side directly contacts the at least one structural member or is directly mechanically connected to the at least one structural member using adhesive. This means that a load may be transferred from the battery cell into the structural member and vice versa. This enhances the structural stability that may be provided by the battery pack. In this context, a side of the structural member that is mechanically connected to the first side of the battery cell may be formed as a shear plane configured to support shear loads. Providing a comparatively large area of the first side to contact or to be mechanically connected to the structural member increases the mechanical strength that can be provided by the battery pack.

In an example, at least a portion of the coating is provided on a textured portion of one or more of the first side, the second side and the lateral side. In other words, a surface of the battery cell on which the coating is provided is pre-treated in that it is textured. This increases the structural integrity of the battery cell in that the coating and the remaining components of the battery cell are connected in a mechanically stable manner. Consequently, the battery cell can support comparatively high loads without the coating being separated from the remaining components of the battery cell.

In an example, the textured portion of one or more of the first side, the second side and the lateral side is formed by a portion of an enclosure or can of the battery cell.

In an example, a first portion of the coating is provided on a portion textured in accordance with a first texturing type of one or more of the first side, the second side and the lateral side. A second portion of the coating is provided on a portion textured in accordance with a second texturing type or a non-textured portion of one or more of the first side, the second side and the lateral side. The first texturing type and the second texturing type are different. Using the texturing of the first texturing type, the texturing of the second texturing type or a non-textured portion allows to locally adjust the mechanical cohesion between the coating and the remaining components of the battery cell. Consequently, in zones configured to support comparatively high loads, the coating and the remaining components of the battery cell may be connected in a more stable manner than in zones configured to support comparatively low loads only. In other words, the mechanical stability of the coating may be customized to the loads occurring during use of the battery cell. In doing so, the capacity of the battery cell to support mechanical loads is enhanced.

According to an example, the texturing may be a laser texturing. In this context, one or both of the texturing of the first texturing type and the texturing of the second texturing type may be provided by laser texturing. Using laser texturing allows to connect the coating to the remaining components of the battery cell in a mechanically stable manner.

According to an example, components of the battery cell may be plasma treated before applying the coating. The plasma-treatment may be provided in addition or as an alternative to the texturing, e.g. laser texturing.

According to an example, the texturing of the first texturing type may have a first depth, wherein the texturing of the second texturing type may have a second depth. The first depth and the second depth may be different.

According to an example, the texturing comprises a waffle pattern or a rectangle pattern. In this context, the pattern of a texturing of the first texturing type may have a first size and a pattern of a texturing of the second texturing type may have a second size. The first size and the second size may be different.

In an example, each of the first side, the second side and the lateral side of each of the plurality of battery cells directly contacts the at least one structural member or is directly mechanically connected to the at least one structural member using adhesive or directly contacts a neighboring battery cell or is directly mechanically connected to a neighboring battery cell using adhesive. Thus, each of the first side, the second side and the lateral side is configured to bear loads in that it is mechanically connected or contacting another battery cell or the structural member. Altogether, a load-bearing capacity of the battery cell is enhanced.

In an example, the first side is oriented downwards during use of the battery pack. This also means that the electric connection terminals are pointing downwards during use of the battery pack. This allows to integrate the battery pack into an electric vehicle in a space-saving manner.

In an example, each of the prismatic battery cells comprises an electrically insulative coating provided on the first side, on the second side and on the lateral side. In other words, a portion of the electrically insulative coating is provided on each of the first side, the second side and the lateral side. Consequently, each of the first side, the second side and the lateral side is configured to contact or to be mechanically connected to another battery cell or to the structural member. In other words, each of the first side, the second side and the lateral side is configured to contribute to a load-bearing capacity of the battery pack.

According to a second aspect, there is provided a prismatic battery cell for a battery pack according to the present disclosure. The battery cell comprises a first side on which two electric connection terminals are provided, a second side arranged opposite the first side, and a circumferentially closed lateral side extending between the first side and the second side. The battery cell comprises an electrically insulative coating provided on one or more of the first side, the second side and the lateral side. The electrically insulative coating of the battery cell enables the direct contact between neighboring battery cells or the mechanical connection of neighboring battery cells using adhesive. It is only due to the coating that this neighboring battery cells may be electrically isolated from one another at the same time. In the same manner, the electrically insulative coating of the battery cell enables the direct contact between the battery cell and a structural member or a mechanical connection of the battery cell and a structural member using adhesive. Also in this respect it is due to the coating that the battery cell may be electrically insulated from the structural member at the same time. Thus, the battery cell of the present disclosure may be mechanically connected to another battery cell, either by a direct contact or by adhesive, and at the same time electrically insulated from the other battery cell. Moreover, the battery cell according to the present disclosure may be mechanically connected to a structural member, either by direct contact or by adhesive, and at the same time electrically insulated from the structural member. Due to these properties, the battery cell according to the present disclosure may be used in a structural battery pack, i.e. a battery pack used as a structural component of an electric vehicle. This means that the battery pack may be used to carry and/or absorb mechanical loads occurring during use of the vehicle. This has the effect that the remaining structural components of the electric vehicle may be adapted to the load-bearing capacity of the battery pack, i.e. the remaining structural components may be reduced in size and weight. This has the effect that, using a battery cell according to the present disclosure, a high electric storage capacity may be provided in an electric vehicle, while at the same time keeping the total weight comparatively low.

According to an example, a first area of the first side is coating-free, wherein a first one of the two electric connection terminals is located in the first area. Moreover, a second area of the first side is coating-free, wherein a second one of the two electric connection terminals is located in the second area. In other words, the electrically insulative coating is interrupted at the location of the electric connection terminals. In this context, the first area and the second area may be separate from one another or connected. In the latter case, the first area the second area are portions of a larger, joint area. Keeping the first area and the second area free from coating allows to reliably connect the battery cell, more precisely the electric connection terminals thereof, in the electric sense. However, the remaining portions of the first side may be covered with electrically insulative coating. This allows to use the remaining portions in a mechanical sense. For example, the remaining portions may directly contact a structural member of the battery pack. Alternatively, the remaining portions may be connected to the structural member using adhesive. This enhances the load-bearing capacity of the battery cell. Additionally, having the remaining portions of the first side covered with coating increases clearance distances between electrically conducting components, e.g. components of the high voltage system, and/or between electrically conducting components, e.g. components of the high voltage system, and components at ground potential, e.g. structural components of the battery pack or the electric vehicle. Moreover, having the remaining portions of the first side covered with coating increases creepage distances between electrically conducting components, e.g. components of the high voltage system, and/or between electrically conducting components, e.g. components of the high voltage system, and components at ground potential, e.g. structural components of the battery pack or the electric vehicle. Both the increased clearance distances and the increase creepage distances allow for an electrically safe operation of the battery pack.

In an example, coating is provided on a portion of the first side located between the two electric connection terminals. This allows to use this portion in a mechanical sense. For example, this portion may directly contact a structural member of the battery pack. Alternatively, this portion may be connected to the structural member using adhesive. This enhances the load-bearing capacity of the battery cell.

In an example, the battery cell further comprises a degassing valve. A third area of the first side is coating-free, wherein the degassing valve is located in the third area. In other words, the electrically insulative coating is interrupted at the location of the degassing valve. Consequently, an operation of the degassing valve is not hindered by the coating. This allows for safe operation of the battery pack.

In an example, coating is provided on a portion of the first side located between the degassing valve and at least one of the two electric connection terminals. According to an example, both a portion of the first side located between the degassing valve and one of the two electric connection terminals and a portion of the first side located between the degassing valve and the respective other one of the two electric connection terminals is covered with coating. The portions of the first side comprising coating may be used in a mechanical sense. For example, these portions may directly contact a structural member of the battery pack. Alternatively, these portions may be connected to the structural member using adhesive. This enhances the load-bearing capacity of the battery cell. Additionally, having these portions of the first side covered with coating increases clearance distances between electrically conducting components, e.g. components of the high voltage system, and/or between electrically conducting components, e.g. components of the high voltage system, and components at ground potential, e.g. structural components of the battery pack or the electric vehicle. Moreover, having the remaining portions of the first side covered with coating increases creepage distances between electrically conducting components, e.g. components of the high voltage system, and/or between electrically conducting components, e.g. components of the high voltage system, and components at ground potential, e.g. structural components of the battery pack or the electric vehicle. Both the increased clearance distances and the increased creepage distances allow for an electrically safe operation of the battery pack.

According to an example, coating is provided at least in a border zone of the first side. The border zone covers a portion of the first side located adjacent to an edge of the first side. In an example, the border zone extends along all edges of the first side. In a case in which the first side is substantially rectangular, the border zone also has a substantially rectangular shape. The shape of the border zone may as well be described as frame-shaped. According to a further example, the border zone extends along all edges of the first side and is at least 1 mm wide or thick. This means that the border zone at least covers the portion of the first side which is located at a distance of 1 mm or less from the edges of the first side. According to another example, the border zone extends along all edges of the first side and is at least 2 mm wide or thick. This means that the border zone at least covers the portion of the first side which is located at a distance of 2 mm or less from the edges of the first side. According to a further example, the border zone extends along all edges of the first side and is at least 3 mm wide or thick. This means that the border zone at least covers a portion of the first side which is located at a distance of 3 mm or less from an edge of the first side. Thus, the border zone. Providing coating in the border zone increases clearance distances between electrically conducting components, e.g. components of the high voltage system, and/or between electrically conducting components, e.g. components of the high voltage system, and components at ground potential, e.g. structural components of the battery pack or the electric vehicle. Thus, undesired arcing effects are avoided. Moreover, providing coating in the border zone increases creepage distances between electrically conducting components, e.g. components of the high voltage system, and/or between electrically conducting components, e.g. components of the high voltage system, and components at ground potential, e.g. structural components of the battery pack or the electric vehicle. Both the increased clearance distances and the increase creepage distances allow for an electrically safe operation of the battery pack.

In an example, at least a portion of the coating is provided on a textured portion of one or more of the first side, the second side and the lateral side. In other words, a surface of the battery cell on which the coating is provided is pre-treated in that it is textured. This increases the structural integrity of the battery cell in that the coating on the remaining components of the battery cell are connected in a mechanically stable manner. Consequently, the battery cell can support comparatively high loads without the coating being separated from the remaining components of the battery cell.

In an example, the textured portion of one or more of the first side, the second side and the lateral side is formed by a portion of an enclosure or can of the battery cell.

According to an example, a first portion of the coating is provided on a portion textured in accordance with a first texturing type of one or more of the first side, the second side and the lateral side. Additionally, a second portion of the coating is provided on a portion textured in accordance with a second texturing type or a non-textured portion of one or more of the first side, the second side and the lateral side. The first texturing type and the second texturing type are different. Using the texturing of the first texturing type, the texturing of the second texturing type or a non-textured portion allows to locally adjust the mechanical cohesion between the coating and the remaining components of the battery cell. Consequently, in zones configured to support comparatively high loads, the coating and the remaining components of the battery cell may be connected in a more stable manner than in zones configured to support comparatively low loads only. In other words, the mechanical stability of the coating may be customized to the loads occurring during use of the battery cell. In doing so, the capacity of the battery cell to support mechanical loads is enhanced.

According to an example, the texturing may be a laser texturing. In this context, one or both of the texturing of the first texturing type and the texturing of the second texturing type may be provided by laser texturing. Using laser texturing allows to connect the coating to the remaining components of the battery cell in a mechanically stable manner.

According to an example, components of the battery cell may be plasma treated before applying the coating. The plasma treatment may be provided in addition or as an alternative to the texturing, e.g. laser texturing.

According to an example, the texturing of the first texturing type may have a first depth, wherein the texturing of the second texturing type may have a second depth. The first depth and the second depth may be different.

According to an example, the texturing comprises a waffle pattern or a rectangle pattern. In this context, the pattern of a texturing of the first texturing type may have a first size and a pattern of a texturing of the second texturing type may have a second size. The first size and the second size may be different.

In an example, the battery cell comprises an electrically insulative coating provided on the first side, on the second side and on the lateral side. In other words, a portion of the electrically insulative coating is provided on each of the first side, the second side and the lateral side. Consequently, each of the first side, second side and the lateral side is configured to contact or to be mechanically connected to another battery cell or to the structural member. In other words, each of the first side, the second side and the lateral side is configured to contribute to a load-bearing capacity of the battery cell.

According to a third aspect, there is provided a use of a battery pack according to the present disclosure as a structural component of a vehicle body. As has been explained above, the coating of the battery cells forming part of the battery pack enables the direct contact between neighboring battery cells or the mechanical connection of neighboring battery cells using adhesive. It is only due to the coating that these neighboring battery cells may be electrically isolated from one another at the same time. In the same manner, the electrically insulative coating of the battery cells enables the direct contact between at least one of the plurality of battery cells and the at least one structural member or the mechanical connection of the at least one battery cell and the at least one structural member using adhesive. Also in this respect it is due to the coating that the at least one battery cell may be electrically isolated from the at least one structural member at the same time. Altogether, in the battery pack of the present disclosure, the battery cells are mechanically connected to one another, either by a direct contact or by adhesive, and at the same time electrically insulated from one another. Moreover, the battery cells are mechanically connected to the structural member, either by direct contact or by adhesive, and at the same time electrically insulated from the structural member. Due to these properties, the battery pack according to the present disclosure may be used as a structural component of an electric vehicle. This means that the battery pack may be used to carry and/or absorb mechanical loads occurring during use of the vehicle. Consequently, the remaining structural components of the electric vehicle may be adapted to the load-bearing capacity of the battery pack, i.e. the remaining structural components may be reduced in size and weight. This has the effect that, using a battery pack according to the present disclosure, a high electric storage capacity may be provided in an electric vehicle, while at the same time keeping the total weight comparatively low.

According to an example, the structural component is an underbody structure or an underfloor structure of the vehicle body.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a battery pack according to the present disclosure which may be used as a structural component of a vehicle body and which comprises a plurality of battery cells according to the present disclosure,
- Figure 2: shows the battery pack of Figure 1 in a sectional view along plane II, wherein additional structural members of the battery pack are shown in Figure 2,
- Figure 3: shows a battery cell of Figure 1 in a separate, perspective view,
- Figure 4: shows the battery cell of Figure 3 in a top view,
- Figure 5: illustrates a manufacturing step for manufacturing the battery cell of Figure 3, and
- Figure 6: illustrates another manufacturing step for manufacturing the battery cell of Figure 3.

### DETAILED DESCRIPTION

The Figures are merely schematic representations and serve only to illustrate examples of the disclosure. Identical or equivalent elements are in principle provided with the same reference signs.

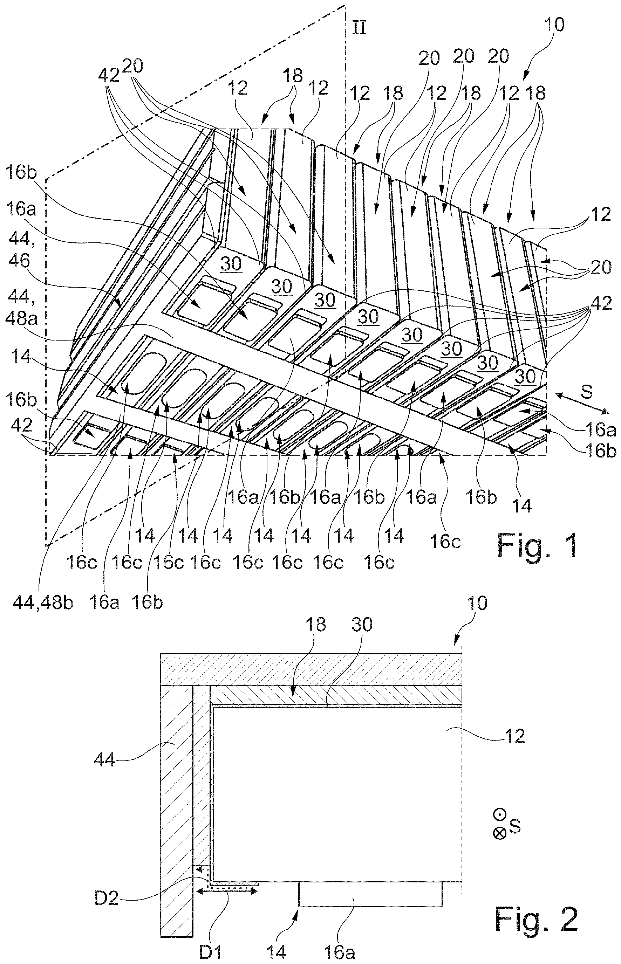

Figure 1 shows a battery pack 10 for an electric vehicle.

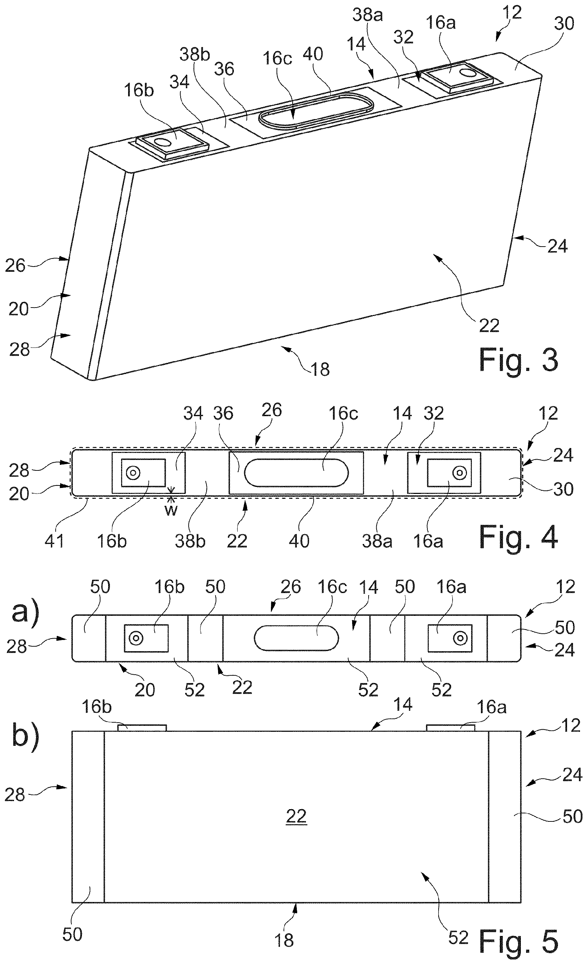

The battery pack 10 comprises a plurality of prismatic battery cells 12 which are all identical. Figures 3 and 4 show one of the battery cells 12 in an isolated view.

In the present example, the prismatic battery cells 12 are substantially cuboid-shaped.

The prismatic battery cell 12 or the cuboid comprises a first side 14 on which to electric connection terminals 16a, 16b are provided. Moreover, in the present example, a degassing valve 16c is provided on the first side 14.

A second side 18 of the prismatic battery cell 12 or cuboid is arranged opposite the first side 14.

Moreover, the prismatic battery cell 12 or cuboid comprises a circumferentially closed lateral side 20 extending between the first side 14 and the second side 18.

Due to the fact that the prismatic battery cells is cuboid-shaped, the lateral side 20 is composed of a third side 22, a fourth side 24, a fifth side 26 and a sixth side 28. Altogether, the lateral side 20 is shaped as a tube with a substantially rectangular cross-section.

The battery cell 12 comprises an electrically insulative coating 30 which is provided on all sides of the battery cell 12 except for a number of coating-free areas which will be explained in the following.

In the example shown in the Figures, a first area 32 is coating-free and the electric connection terminal 16a is located in the first area 32.

Moreover, a second area 34 is coating-free and the electric connection terminals 16b is provided in the second area 34.

Also a third area 36 is coating-free and the degassing valve 16c is located in the third area 36.

In the example shown in the figures, each of the first area 32, the second area 34 and the third area 36 is substantially rectangular.

In other words, the coating 30 covers the first side 14 except for the first area 32, the second area 34 and the third area 36.

This especially means that coating 30 is provided on portions of the first side 14 located between the two electric connection terminals 16a, 16b. These portions are designated with reference signs 38a, 38b.

Moreover, portion 38a is provided between the degassing valve 16c and the electric connection terminals 16a. Portion 38b is provided between the degassing valve 16c and the electric connection terminals 16b.

Additionally, the coating 30 on the first side 14 is arranged such that coating 30 is provided in a border zone 40 of the first side 14. The border zone 40 covers a portion of the first side 14 extending along an edge 41 of the first side. In the present example, the edge 41 circumferentially encloses the first side 14. The edge 41 is indicated by a dashed line in Figure 4. In the present example, the border zone 40 has a width W of 3 mm. This means that the border zone 40 covers a distance of 3 mm or less from the edge 41 of the first side 14.

The second side 18 is fully covered with coating 30. Also the third side 22, the fourth side 24, the fifth side 26, and the sixth side 28 are fully covered by the coating 30.

Within the battery pack 10, the plurality of prismatic battery cells 12 are arranged side by side along a straight stacking direction S (cf. Figure 1).

Moreover, neighboring battery cells 12 are directly mechanically connected to one another using adhesive 42.

The battery pack 12 also comprises a structural member 44.

In the present example, the structural member comprises an end plate 46 and two lower support members 48a, 48b.

It is understood that the structural member 44 is only represented schematically in the Figures.

The first and last of the battery cells 12 of one stack are mechanically connected to the structural member 44, more precisely the end plate 46 using adhesive 42.

Additionally, the coating 30 provided in the portions 38a, 38b of the first side 14 is mechanically connected to the lower support member 48a and the lower support member 48b of the structural member 44 respectively using adhesive 42.

The coating 30 of the battery cells 12 has the effect that a clearance distance D1 between a non-coated portion of the battery cell 12 and a portion of the structural member 44 may has a magnitude, i.e. distance or length, that is sufficient for safe operation of the battery pack 10. The clearance distance D1 is illustrated in Figure 2.

In the example shown in Figure 2, the clearance distance D1 amounts to approximately 8 mm. However, also other measures are possible. It has been found that the clearance distance D1 should be at least 4 mm.

In the same manner, the coating 30 of the battery cells 12 has the effect that a creepage distance D2 between a non-coated portion of the battery cell 12 and a portion of the structural member 44 has a magnitude, i.e. distance or length, that is sufficient for safe operation of the battery pack 10. The creepage distance D2 is illustrated in Figure 2.

In the example shown in Figure 2, the creepage distance D2 amounts to approximately 12 mm. However, also other measures are possible. It has been found that the creepage distance D2 should be at least 10 mm.

It is noted that both the clearance distance D1 and the creepage distance D2 are the smallest distances between the non-coated portion of the battery cell 12 and the structural member 44.

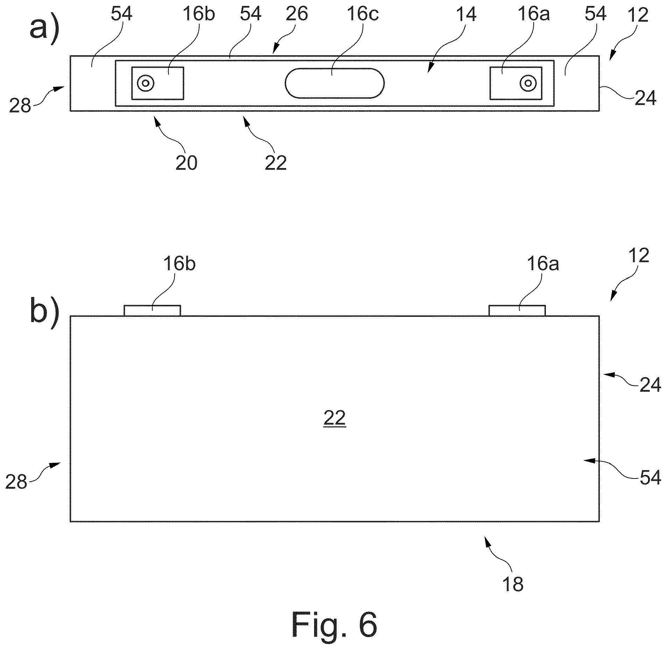

Figures 5 and 6 illustrate steps for manufacturing a battery cell 12. More precisely, Figures 5 and 6 illustrates steps for providing the coating 30 of the battery cell 12.

The production of the battery cell 12 involves two steps of so-called pretreatment.

It is understood that Figure 5 and 6 show intermediate states of the battery cell 12 during production. In the states of Figures 5 and 6 the coating 30 has not been applied yet. It is only after the completion of the pretreatment steps that the coating 30 will be applied on the battery cell 12, i.e. on an outside of an enclosure of the battery cell 12 as indicated in Figures 3 and 4.

In a first pretreatment step, a texturing 50 of a first texturing type is formed on all sides of the battery cell 12. This is illustrated in Figure 5, wherein Figure 5 a) shows a top view onto the first side 14 of the battery cell 12 and Figure 5 b) shows a lateral view onto the third side 22 of the battery cell 12.

More precisely, the texturing 50 is provided on the portions of the first side 14 of the battery cell as indicated in Figure 5 a). Thus, the first side 14 is not completely covered by the texturing 50.

Also on the third side 22 only the portions as indicated in Figure 5 b) are covered with the texturing 50. Thus, also the third side is not completely covered by the texturing 50. The texturing on the fifth side 26 corresponds to the texturing on the third side 22.

The second side, the fourth side 24 and the sixth side 28 are fully covered with the texturing 50 of the first texturing type.

The non-textured portions are indicated with reference sign 52.

It is understood that according to an alternative, the non-textured portions of the first side, the third side and the fifth side 26 may be provided with a texturing of a second texturing type. In this context, the second texturing type is different from the first texturing type.

A second pretreatment step comprises a plasma treatment of the battery cell 12. This is illustrated in Figure 6, wherein Figure 6 a) is a top view onto the first side 14 of the battery cell 12. Figure 6 b) is a lateral view onto the third side 22 of the battery cell 12.

As far as the first side 14 is concerned, the plasma treatment is provided on the portions 54 of the first side 14 of the battery cell 12 as indicated in figure 6 a). The remaining portion are not plasma-treated.

The second side 18, the third side 22, the fourth side 24, the fifth side 26 and the sixth side 28 are plasma treated in their entirety.

The pre-treatment of the sides of the battery cell 12 allows the coating 30 to be connected to the remaining components of the battery cell 12, i.e. the enclosure of the battery cell 12, in a mechanically stable manner.

In the present example, the battery pack 10 is used as a structural component of a vehicle body. More precisely, the battery pack 10 forms a structural component of an underbody of the electric vehicle.

It is noted that the first side 14 of the battery pack 10 is oriented downwards during use of the battery pack, i.e. during usual operation of the electric vehicle. This means that the electric connection terminals 16a, 16b and the degassing valve 16c are pointing downwards.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: battery pack
- 12: battery cell
- 14: first side
- 16a: electric connection terminal
- 16b: electric connection terminal
- 16c: degassing valve
- 18: second side
- 20: lateral side
- 22: third side
- 24: fourth side
- 26: fifth side
- 28: sixth side
- 30: electrically insulative coating
- 32: first area
- 34: second area
- 36: third area
- 38a: portion
- 38b: portion
- 40: border zone
- 41: edge of the first side
- 42: adhesive
- 44: structural member
- 46: end plate
- 48a: lower support member
- 48b: lower support member
- 50: texturing
- 52: non-textured portion
- 54: plasma treated portion

- S: stacking direction
- D1: clearance distance
- D2: creepage distance
- W: width of border zone

## Claims

1. A battery pack (10) for an electric vehicle, the battery pack (10) comprising a plurality of prismatic battery cells (12) and at least one structural member (44),
wherein each battery cell (12) comprises a first side (14) on which two electric connection terminals (16a, 16b) are provided, a second side (18) arranged opposite the first side (14), and a circumferentially closed lateral side (20) extending between the first side (14) and the second side (18),
wherein each of the prismatic battery cells (12) comprises an electrically insulative coating (30) provided on one or more of the first side (14), the second side (18) and the lateral side (20),
wherein the plurality of prismatic battery cells (12) are arranged side by side along a straight stacking direction (S),
wherein neighboring battery cells (12) directly contact each other or are directly mechanically connected to one another using adhesive (42), and
wherein at least one of the plurality of battery cells (12) directly contacts the at least one structural member (44) or is directly mechanically connected to the at least one structural member (44) using adhesive (42).

2. The battery pack (10) of claim 1, wherein a first area (32) of the first side (14) is coating-free, wherein a first one of the two electric connection terminals (16a, 16b) is located in the first area (32), and wherein a second area (34) of the first side (14) is coating-free, wherein a second one of the two electric connection terminals (16a, 16b) is located in the second area (34).

3. The battery pack (10) of claim 1 or 2, wherein coating (30) is provided on a portion (38a, 38b) of the first side (14) located between the two electric connection terminals (16a, 16b).

4. The battery pack (10) of any one of the preceding claims, wherein each battery cell (12) of the plurality of battery cells (12) comprises a degassing valve (16c) and wherein a third area (36) of the first side (14) is coating-free, wherein the degassing valve (16c) is located in the third area (36).

5. The battery pack (10) of claim 4, wherein coating (30) is provided on a portion (38a, 38b) of the first side (14) located between the degassing valve (16c) and at least one of the two electric connection terminals (16a, 16b).

6. The battery pack (10) of any one of the preceding claims, wherein coating (30) is provided at least in a border zone (40) of the first side (14), the border zone (40) covering a portion of the first side (14) adjacent to an edge (41) of the first side (14).

7. The battery pack (10) of any of the preceding claims, wherein coating (30) is provided on the first side (14) and wherein the coating (30) provided on the first side (30) directly contacts the at least one structural member (44) or is directly mechanically connected to the at least one structural member (44) using adhesive (42).

8. The battery pack (10) of any of the preceding claims, wherein at least a portion of the coating (30) is provided on a textured portion (50) of one or more of the first side (14), the second side (18) and the lateral side (20).

9. The battery pack (10) of claim 8, wherein a first portion of the coating (30) is provided on a portion (50) textured in accordance with a first texturing type of one or more of the first side (14), the second side (18) and the lateral side (20), and
wherein a second portion of the coating (30) is provided on a portion textured in accordance with a second texturing type or a non-textured portion (52) of one or more of the first side (14), the second side (18) and the lateral side (20),
wherein the first texturing type and the second texturing type are different.

10. The battery pack (10) of any one of the preceding claims, wherein each of the first side (14), the second side (18) and the lateral side (20) of each of the plurality of battery cells (12) directly contacts the at least one structural member (44) or is directly mechanically connected to the at least one structural member (44) using adhesive (42) or directly contacts a neighboring battery cell (12) or is directly mechanically connected to a neighboring battery cell (12) using adhesive (42).

11. The battery pack (10) of any one of the preceding claims, wherein during use of the battery pack (10) the first side (14) is oriented downwards.

12. The battery pack (10) of any one of the preceding claims, wherein each of the prismatic battery cells (12) comprises an electrically insulative coating (30) provided on the first side (14), on the second side (18) and on the lateral side (20).

13. A prismatic battery cell (12) for a battery pack (10) according to any one of the preceding claims, wherein the battery cell (12) comprises a first side (14) on which two electric connection terminals (16a, 16b) are provided, a second side (18) arranged opposite the first side (14), and a circumferentially closed lateral side (20) extending between the first side (14) and the second side (18), and
wherein the battery cell (12) comprises an electrically insulative coating (30) provided on one or more of the first side (14), the second side (18) and the lateral side (20).

14. The battery cell (12) of claim 13, wherein coating (30) is provided at least in a border zone (40) of the first side (14), the border zone (40) covering a portion of the first side (14) located at a distance of 1 mm or less, preferably at a distance of 2 mm or less, from an edge (41) of the first side (14).

15. A use of a battery pack (10) according to any of claims 1 to 12 as a structural component of a vehicle body.

## Amended claims

### Amended claims in accordance with Rule 137(2) EPC.

1. A battery pack (10) for an electric vehicle, the battery pack (10) comprising a plurality of prismatic battery cells (12) and at least one structural member (44),
wherein each battery cell (12) comprises a first side (14) on which two electric connection terminals (16a, 16b) are provided, a second side (18) arranged opposite the first side (14), and a circumferentially closed lateral side (20) extending between the first side (14) and the second side (18),
wherein each of the prismatic battery cells (12) comprises an electrically insulative coating (30) provided on one or more of the first side (14), the second side (18) and the lateral side (20),
wherein the plurality of prismatic battery cells (12) are arranged side by side along a straight stacking direction (S),
wherein neighboring battery cells (12) directly contact each other or are directly mechanically connected to one another using adhesive (42),
wherein at least one of the plurality of battery cells (12) directly contacts the at least one structural member (44) or is directly mechanically connected to the at least one structural member (44) using adhesive (42)
**characterized in that**
- coating (30) is provided on a portion (38a, 38b) of the first side (14) located between the two electric connection terminals (16a, 16b) and/or
- each battery cell (12) of the plurality of battery cells (12) comprises a degassing valve (16c) and wherein a third area (36) of the first side (14) is coating-free, wherein the degassing valve (16c) is located in the third area (36), and wherein coating (30) is provided on a portion (38a, 38b) of the first side (14) located between the degassing valve (16c) and at least one of the two electric connection terminals (16a, 16b) and/or
- wherein coating (30) is provided at least in a border zone (40) of the first side (14), the border zone (40) covering a portion of the first side (14) adjacent to an edge (41) of the first side (14).

2. The battery pack (10) of claim 1, wherein a first area (32) of the first side (14) is coating-free, wherein a first one of the two electric connection terminals (16a, 16b) is located in the first area (32), and wherein a second area (34) of the first side (14) is coating-free, wherein a second one of the two electric connection terminals (16a, 16b) is located in the second area (34).

3. The battery pack (10) of any of the preceding claims, wherein coating (30) is provided on the first side (14) and wherein the coating (30) provided on the first side (30) directly contacts the at least one structural member (44) or is directly mechanically connected to the at least one structural member (44) using adhesive (42).

4. The battery pack (10) of any of the preceding claims, wherein at least a portion of the coating (30) is provided on a textured portion (50) of one or more of the first side (14), the second side (18) and the lateral side (20).

5. The battery pack (10) of claim 4, wherein a first portion of the coating (30) is provided on a portion (50) textured in accordance with a first texturing type of one or more of the first side (14), the second side (18) and the lateral side (20), and
wherein a second portion of the coating (30) is provided on a portion textured in accordance with a second texturing type or a non-textured portion (52) of one or more of the first side (14), the second side (18) and the lateral side (20),
wherein the first texturing type and the second texturing type are different.

6. The battery pack (10) of any one of the preceding claims, wherein each of the first side (14), the second side (18) and the lateral side (20) of each of the plurality of battery cells (12) directly contacts the at least one structural member (44) or is directly mechanically connected to the at least one structural member (44) using adhesive (42) or directly contacts a neighboring battery cell (12) or is directly mechanically connected to a neighboring battery cell (12) using adhesive (42).

7. The battery pack (10) of any one of the preceding claims, wherein during use of the battery pack (10) the first side (14) is oriented downwards.

8. The battery pack (10) of any one of the preceding claims, wherein each of the prismatic battery cells (12) comprises an electrically insulative coating (30) provided on the first side (14), on the second side (18) and on the lateral side (20).

9. A prismatic battery cell (12) for a battery pack (10) according to any one of the preceding claims, wherein the battery cell (12) comprises a first side (14) on which two electric connection terminals (16a, 16b) are provided, a second side (18) arranged opposite the first side (14), and a circumferentially closed lateral side (20) extending between the first side (14) and the second side (18), and
wherein the battery cell (12) comprises an electrically insulative coating (30) provided on one or more of the first side (14), the second side (18) and the lateral side (20), **characterized in that**
- coating (30) is provided on a portion (38a, 38b) of the first side (14) located between the two electric connection terminals (16a, 16b) and/or
- each battery cell (12) of the plurality of battery cells (12) comprises a degassing valve (16c) and wherein a third area (36) of the first side (14) is coating-free, wherein the degassing valve (16c) is located in the third area (36) , and wherein coating (30) is provided on a portion (38a, 38b) of the first side (14) located between the degassing valve (16c) and at least one of the two electric connection terminals (16a, 16b) and/or
- wherein coating (30) is provided at least in a border zone (40) of the first side (14), the border zone (40) covering a portion of the first side (14) adjacent to an edge (41) of the first side (14).

10. The battery cell (12) of claim 9, wherein the border zone (40) covers a portion of the first side (14) located at a distance of 1 mm or less, preferably at a distance of 2 mm or less, from an edge (41) of the first side (14).

11. A use of a battery pack (10) according to any one of claims 1 to 8, wherein a first side (14) of the battery pack (10) is oriented downwards.

12. A use of a battery pack (10) according to any of claims 1 to 8 as a structural component of a vehicle body.
